(19) Europäisches Patentamt
European Patent Office
Office européen des brevets

(11) EP 0 703 263 A1

(12) # EUROPÄISCHE PATENTANMELDUNG

(43) Veröffentlichungstag:
**27.03.1996 Patentblatt 1996/13**

(51) Int. Cl.[6]: **C08G 64/42**, B29C 47/06

(21) Anmeldenummer: **95112503.8**

(22) Anmeldetag: **09.08.1995**

(84) Benannte Vertragsstaaten:
**BE DE FR GB IT NL**

(30) Priorität: **22.08.1994 DE 4429697**

(71) Anmelder: **BAYER AG**
**D-51368 Leverkusen (DE)**

(72) Erfinder:
- **Scholl, Thomas, Dr.**
**D-51469 Bergisch Gladbach (DE)**
- **Bier, Peter, Dr.**
**D-47800 Krefeld (DE)**

(54) **Verfahren zur Herstellung von UV-stabilen Polycarbonaten**

(57) Gegenstand der vorliegenden Erfindung sind ein Verfahren zur Herstellung von UV-stabilen Polycarbonaten, die erfindungsgemäß erhältlichen Polycarbonate und ihre Verwendung zur Herstellung von Platten, insbesondere von mehrschichtigen Kunststofftafeln.

In dem beanspruchten Verfahren werden aromatische Polycarbonate mit 2-Hydroxyphenyl-benztriazolen, die noch eine Carbonsäuresalzgruppe enthalten, sowie Diarylcarbonat umgesetzt.

EP 0 703 263 A1

**Beschreibung**

Gegenstand der vorliegenden Erfindung ist ein Verfahren zur Herstellung von UV-stabilen Polycarbonaten, das dadurch gekennzeichnet ist, daß thermoplastische, aromatische Polycarbonate mit $\overline{M}w$ (Gewichtsmittelmolekulargewichten ermittelt durch Lichtsteuerung) von 1.500 bis 250.000, vorzugsweise von 5.000 bis 150.000, mit Verbindungen der Formel (I)

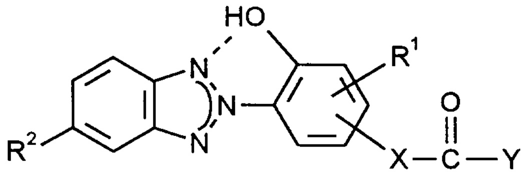

(I)

worin

R1 H, $C_1$-$C_{18}$-Alkyl, $C_5$-$C_6$-Cycloalkyl, $C_6$-$C_{12}$-Aryl, R2 H, Cl oder $C_1$-$C_{12}$-Alkyl,
X eine Einfachbindung, ein $C_1$-$C_{12}$-Alkylen, $C_5$-$C_6$-Cycloalkylen oder Phenylen und
Y OH, O-Alkali, -O-Ammonium oder O-(1/2 Erdalkali) bedeuten,

in Mengen von 0,01 Gew.-% bis 35 Gew.-%, vorzugsweise 0,1 Gew.-% bis 25 Gew.-% und insbesondere von 0,2 Gew.-% bis 15 Gew.-%, bezogen jeweils auf 100 Gew.-% thermoplastisches Polycarbonat, 0,5 bis 1,5 Mol Diarylcarbonaten pro Mol Verbindung (I) sowie gegebenenfalls weiteren Mengen Diphenolen und weiteren Mengen Diarylcarbonat, bei Temperaturen von 200 bis 420°C, vorzugsweise von 200 bis 350°C und insbesondere von 250 bis 330°C und bei Drücken von 0,01 mbar bis 1.000 mbar, vorzugsweise von 0,1 mbar bis 100 mbar umgesetzt werden, wobei Reaktionszeiten von wenigen Minuten bis zu einigen Stunden, vorzugsweise von 1 bis 60 Minuten eingehalten werden.

Die Umsetzung erfolgt vorzugsweise ohne Katalysatoren, kann aber auch mit alkalischen Katalysatoren, wie z.B. den Hydroxiden, Carbonaten, Hydrogencarbonaten, Acetaten oder Stearaten von Alkali- oder Erdalkalimetallen, beschleunigt werden. Weitere geeignete Katalysatoren sind stickstoffhaltige basische Verbindungen wie Tetramethylammoniumhydroxid oder Borsäure und Borsäureester, wie z.B. Triethylborat und Triphenylborat.

Die Menge des Katalysators richtet sich nach dessen Typ und Wirksamkeit und liegt zwischen 1 x $10^{-2}$ bis 1 x $10^{-9}$ Gew.-%, bezogen auf eingesetztes Polycarbonat.

Die erfindungsgemäß erhältlichen Polycarbonate haben ein hohes Maß an UV-Schutz, der auch bei Verarbeitung der Polycarbonate zu Formkörpern, insbesondere zu Stegdoppelplatten unter den Bedingungen oder Vakuumextrusion, also unter erhöhten Temperaturen und vermindertem Druck erhalten bleibt.

Die UV-Absorber der Formel (I) sind somit an die Polycarbonate chemisch gebunden.

Gegenstand der vorliegenden Erfindung sind somit auch die nach dem erfindungsgemäßen Verfahren erhältlichen UV-stabilen Polycarbonate.

Gemäß US-PS 3 214 436 ist es bekannt, UV-Absorber vom Typ (I) Alkydharzen, Polyesterharzen, Epoxyharzen und Polyurethanharzen zuzusetzen oder in diese einzuarbeiten. Hierbei reagieren die ortho-ständigen OH-Gruppen im UV-Absorber nicht.

Aus der EP-B 0 057 160 ist bekannt, UV-Absorber der Struktur (I) Polcarbonaten nach herkömmlichen Methoden, beispielsweise der Schmelze des Polymer zuzusetzen (siehe Seite 10, Zeile 17 und Zeilen 50/54 der EP-B).

Ob diese reine Zumischung der UV-Absorber der Formel (I) zu den Polycarbonaten gemäß EP-B 0 057 160, Seite 10 zur chemischen Anbindung der UV-Absorber an die Polycarbonate führt, geht aus der EP-B 0 057 160 nicht hervor.

Andererseits können gemäß EP-B 0 057 160 die UV-Absorber der Formel (I) auch in Polymere, wie Lackbindemittel eingebaut werden (siehe Seite 9, Zeile 12 der EP-B), beispielsweise bei der Synthese von Alkydharzen (Beispiel (IV), Seiten 27 ff der EP-B).

Aus der DE-OS 3 903 487 ist bekannt, wetterbeständige Polycarbonate durch Lösungspolymerisation herzustellen, wobei Kettenabbrecher der Formel (II)

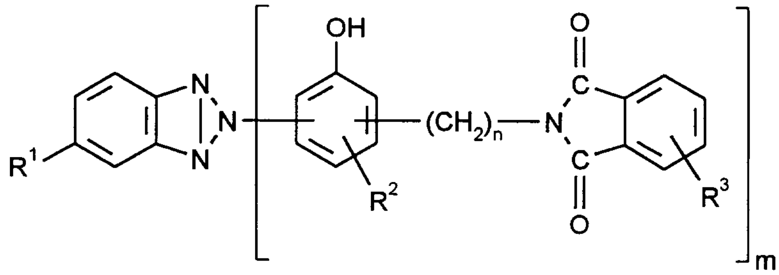

(II)

über die OH-Gruppe eingebaut werden. Derartige Polycarbonate haben jedoch den Nachteil, daß die für den UV-Schutz maßgeblich mitverantwortliche OH-Gruppe nicht mehr in freier Form, sondern als Carbonat gebunden vorliegt. Erfahrungsgemäß geht hierdurch die Schutzwirkung zum großen Teil verloren. Die zu DE-OS 3 903 487 angewandten Belichtungszeiten (100 h) sind zu kurz als daß man Vorteile für das Verhalten in der Praxis daraus ableiten könnte.

Aus der JA-04-05291 vom 9.1.1992 ist bekannt Verbindungen der Struktur (III) bei der Herstellung

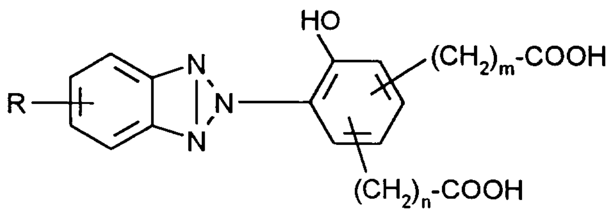

(III)

von Polymeren, wie Polyester einzubauen. Die OH-Gruppe von (III) reagiert hierbei offenbar nicht

In den Vergleichsbeispielen 4, 5 und 6 der JA-04-05291 werden UV-Absorber der Formel (I) eingesetzt, die zu schlechteren Polyestern führen.

Aus der DE-OS 3 320 260 (LeA 22 153) ist die Reaktion von hochmolekularen Polycarbonaten mit Carbonsäuren unter Verwendung von Katalysatoren bekannt, welche zu einem Abbau der Polycarbonate unter Umesterung führt.

Aus dem US-PS 5 021 521 ist die Reaktion von aromatischen Polycarbonaten mit mehrwertigen Phenolen, die mehr als zwei OH-Gruppen haben, bekannt. Es werden durch Umesterung verzweigte Polycarbonate hergestellt.

In den letztgenannten beiden Fällen reagieren jeweils alle funktionellen Gruppen der Reaktionspartner der Polycarbonate unter Umesterung.

Die als Ausgangsprodukte einzusetzenden thermoplastischen, aromatischen Polycarbonate im Sinne der vorliegenden Erfindung sind sowohl Homopolycarbonate als auch Copolycarbonate; die Polycarbonate können in bekannter Weise linear oder verzweigt sein.

Die Herstellung dieser erfindungsgemäß zu stabilisierenden Ausgangspolycarbonate erfolgt in bekannter Weise aus Diphenolen, Kohlensäurederivaten, gegebenenfalls Kettenabbrechern und gegebenenfalls Verzweigern.

Einzelheiten der Herstellung von Polycarbonaten sind in vielen Patentschriften seit etwa 40 Jahren niedergelegt. Beispielhaft sei hier nur auf "Schnell", Chemistry and Physics of Polycarbonates", Polymer Reviews, Volume 9, Interscience Publishers, New York, London, Sydney 1964, auf D. Freitag, U. Grigo, P.R. Müller, H. Nonvertue', BAYER AG, "Polycarbonates" in Encyclopedia of Polymer Science and Engineering, Volume 11, Second Edition, 1988, Seiten 648-718 und schließlich auf Dres. U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Für die Herstellung der erfindungsgemäß zu stabilisierenden Polycarbonate geeignete Diphenole sind beispielsweise Hydrochinon, Resorcin, Dihydroxydiphenyle, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, $\alpha,\alpha'$-Bis-(hydroxyphenyl)-diisopropylbenzole, sowie deren kernalkylierte und kernhalogenierte Verbindungen.

Bevorzugte Diphenole sind 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-3,3,5-trimethylcyclohexan.

Besonders bevorzugte Diphenole sind 2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-cyclohexan und 1,1-Bis-(4-hydroxyphenyl)-3,3,5-trimethylcyclohexan.

Diese und weitere geeignete Diphenole sind z.B. in den US-PS 3 028 635, 2 999 835, 3 148 172, 2 991 273, 3 271 367, 4 982 014 und 2 999 846, in den deutschen Offenlegungsschriften 1 570 703, 2 063 050, 2 036 052, 2 211 956 und 3 832 396, der französischen Patentschrift 1 561 518, in der Monographie "H. Schnell, Chemistry and Physics of Polycarbonates, Interscience Publishers, New York 1964" sowie in den japanischen Offenlegungsschriften 62039/1986, 62040/1986 und 105550/1986 beschrieben.

Im Falle der Homopolycarbonate ist nur ein Diphenol eingesetzt, im Falle der Copolycarbonate sind mehrere Diphenole eingesetzt.

Geeignete Kohlensäurederivate sind beispielsweise Phosgen oder Diphenylcarbonat.

Geeignete Kettenabbrecher sind sowohl Monophenole als auch Monocarbonsäuren. Geeignete Monophenole sind Phenol selbst, Alkylphenole wie Kresole, p-tert.-Butylphenol, p-n-Octylphenol, p-iso-Octylphenol, p-n-Nonylphenol und p-iso-Nonylphenol, Halogenphenole wie p-Chlorphenol, 2,4-Dichlorphenol, p-Bromphenol und 2,4,6-Tribromphenol.

Geeignete Monocarbonsäuren sind Benzoesäure, Alkylbenzoesäuren und Halogenbenzoesäuren.

Bevorzugte Kettenabbrecher sind die Phenole der Formel (IV)

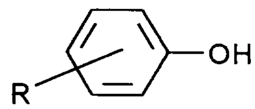

(IV)

worin

R ein verzweigter oder unverzweigter $C_8$- und/oder $C_9$-Alkylrest ist.

Die Menge an einzusetzendem Kettenabbrecher beträgt 0,1 Mol-% bis 5 Mol-%, bezogen auf Mole an jeweils eingesetzten Diphenolen. Die Zugabe der Kettenabbrecher kann vor, während oder nach der Phosgenierung erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxyphenyl-isopropyl)-phenyl)-orthoterephthalsäureester, Tetra-(4-hydroxyphenyl)-methan, Tetra-(4-(4-hydroxyphenyl-isopropyl)-phenoxy)-methan und 1,4-Bis-(4',4"-dihydroxytriphenyl)-methyl)-benzol sowie 2,4-Dihydroxybenzoesäure, Trimesinsäure, Cyanurchlorid und 3,3-Bis-(3-methyl-4-hydroxyphenyl)-2-oxo-2,3-dihydroindol.

Die Menge der gegebenenfalls einzusetzenden Verzweiger betragt 0,05 Mol-% bis 2 Mol-%, bezogen wiederum auf Mole an jeweils eingesetzten Diphenolen.

Die Verzweiger können entweder mit den Diphenolen und den Kettenabbrechern in der wäßrig alkalischen Phase vorgelegt werden, oder in einem organischen Lösungsmittel gelöst vor der Phosgenierung zugegeben werden. Im Falle des Umesterungsverfahrens werden die Verzweiger zusammen mit den Diphenolen eingesetzt.

Alle diese Maßnahmen zur Herstellung der Ausgangspolycarbonate sind dem Fachmann geläufig.

Die Verbindungen der Formel (I) sind entweder linteraturbekannt oder nach literaturbekannten Verfahren erhältlich, beispielsweise gemäß dem folgenden Reaktionsschema:

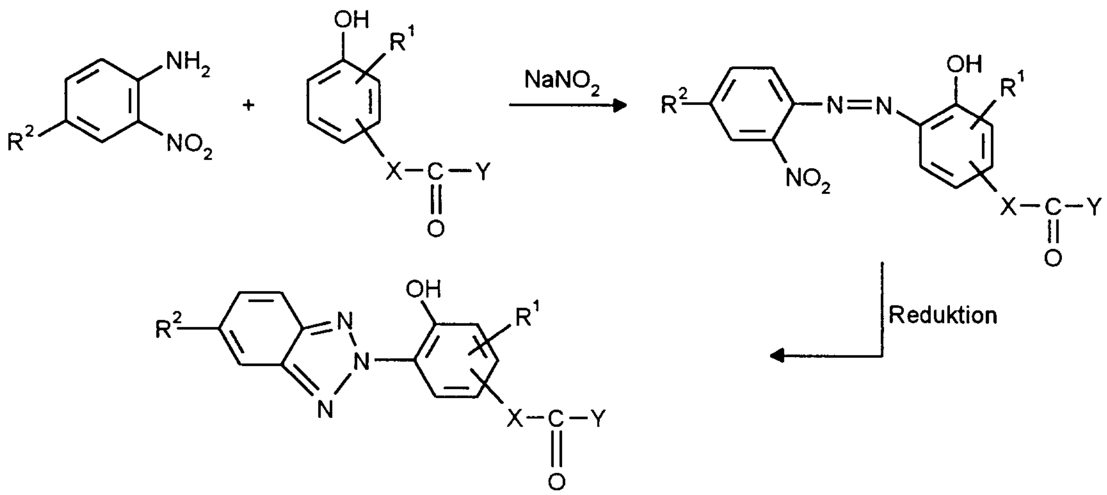


Siehe hierzu beispielsweise EP-B 0 057 160, Seite 7.

Bevorzugte Verbindungen der Formel (I) sind

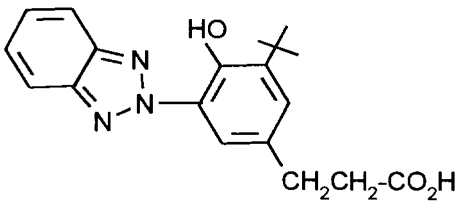

,

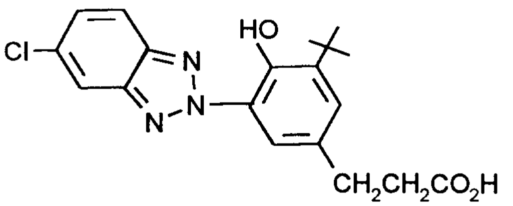

,

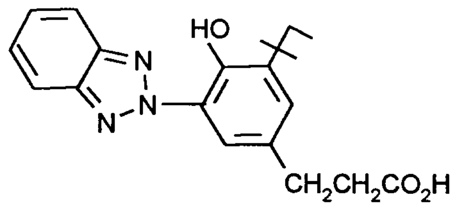

,

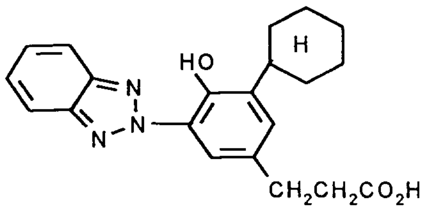

,

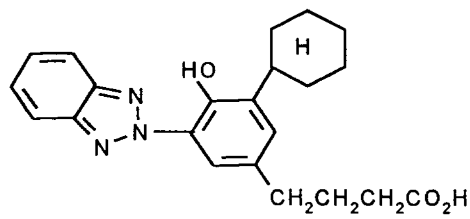

,

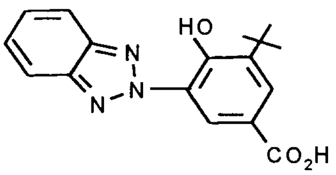

,

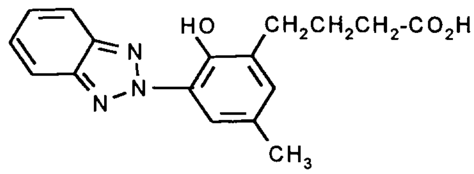

.

Geeignete Diarylcarbonate sind beispielsweise Diphenylcarbonat und Dikresylcarbonat.

Die gegebenenfalls zusätzlich einzusetzenden Diphenole entsprechen denjenigen, die vorstehend für die Herstellung der Polycarbonate bereits genannt wurden.

Die nach dem erfindungsgemäßen Verfahren erhältlichen Polycarbonate werden in bekannter Weise isoliert, indem die Schmelze extrudiert und granuliert wird.

Die nach dem erfindungsgemäßen Verfahren erhältlichen Polycarbonate haben mittlere Molekulargewichte $\overline{M}w$ (Gewichtsmittel, ermittelt durch Lichtstreuung) von 1500 bis 150 000, vorzugsweise von 5 000 bis 100 000.

Die nach dem erfindungsgemäßen Verfahren erhältlichen Polycarbonate können mit den für Polycarbonate üblichen Additiven versetzt werden und in für Polycarbonate bekannter Weise zu den verschiedensten Formkörpern, wie Folien, Platten, Fasern und anderen Spritzguß- und Extrusionsartikeln verformt werden.

Eine Anwendung der erfindungsgemäß erhältlichen, gegen UV-Licht stabilisierten Polycarbonate ist weiterhin die Herstellung von mehrschichtigen Kunststofftafeln nach dem (Mehrfach-) Coextrusionsverfahren, bei dem die tragende Kernschicht, beispielsweise aus ABS, linearem oder verzweigtem Polystyrol, vorzugsweise linearem oder verzweigten Polycarbonat besteht und auf einer oder beiden Seiten der Kernschicht die erfindungsgemäßen, Struktur (I)-enthaltenden Polycarbonate aufgebracht werden. Bevorzugte, erfindungsgemäße erhältliche Polycarbonate enthalten für diese Anwendung zwischen 1 Gew.-% und 15 Gew.-% gebundene Strukturen (I), vorzugsweise 5 bis 10 Gew.-%.

Die Schichtdicke der UV-Absorbtionsschicht soll zwischen 5 µm und 50 µm liegen. Auf die der Kernschicht abgewandten Seite kann eine weitere, im wesentlichen UV-Absorber-freie Deckschicht von bis 30 µm aufgebracht werden.

Die erfindungsgemäß erhältlichen, UV-geschützten Polycarbonate zeigen durch ihre unverändert hohe Glastemperatur und Schmelzviskosität besondere verarbeitungstechnische Vorteile in der letztgenannten Anwendung (Coextrusion) gegenüber Polycarbonaten mit additiv zugesetzten UV-Absorbern, deren Glastemperatur und Schmelzviskosität deutlich mit steigendem Gehalt an UV-Absorber fällt. Eine ganz besondere Bedeutung kommt hier auch der Flüchtigkeit und der Migrationsstabilität der bis heute nur additiv zugesetzten Lichtschutzmittel zu. Die ausdampfenden oder ausschwitzenden UV-Absorber können Beläge bilden oder die komplizierten Extrusionsdüsen verstopfen, ferner kann durch Migration der nicht gebundenen UV-Absorber in der Schmelze die hochkonzentrierte Deckschicht an UV-Absorber verarmen und so einen Teil ihrer Schutzfunktion einbüßen. Durch die Verwendung der erfindungsgemäßen, in sich geschützten Polycarbonate können alle diese Nachteile vermieden werden.

Gegenstand der vorliegenden Erfindung ist somit auch die Verwendung der erfindungsgemäß erhältlichen Polycarbonate zur Herstellung von Platten, wie massiven Platten und Stegmehrfachplatten, und zur Herstellung von mehrschichtigen Kunststofftafeln, wobei die Schichtdicke der äußeren Schicht, die aus einem erfindungsgemäß erhältlichen Polycarbonat mit 1 Gew.-% bis 15 Gew.-% Endgruppen der Struktur (I) besteht, 5 bis 50 µm, vorzugsweise 20 bis 40 µm beträgt.

## Beispiele

### A: UV-absorbierende Ausgangsprodukte

A1: 2-(2-Hydroxy-3-tert-butyl-5-(2-carboxyethyl)-phenyl-benztriazol Fp. 195°C (Herstellung analog EP 57.160, Bsp. 1)

A 2: 2-(2-Hydroxy-3-cyclohexyl-5-(3-carboxypropyl)-phenyl-benztriazol

(a) 132 g (0,75 mol) 2-Cyclohexylphenol werden in 800 ml trockenem Chlorbenzol gelöst. Dann gibt man bei 5 bis 10°C 200 g (1,5 mol) $AlCl_3$ hinzu und anschließend bei 0 bis 10°C eine Lösung von 73,5 g (0,75 mol) Maleinsäureanhydrid in 400 ml Chlorbenzol. Nach 12 Stunden bei Raumtemperatur gießt man auf Eiswasser und säuert mit konzentrierter HCl an. Man erhält 85 g eines gelben Pulvers mit dem Fp. 187 bis 190°C.

(b) 34,5 g (0,25 mol) o-Nitroanilin werden in 300 ml Wasser und 69 ml konzentrierter HCl verrührt. Dann tropft man bei 5°C eine Lösung von 17,3 g (0,25 mol) Natriumnitrit in 155 ml Wasser hinzu. Diese Lösung wird anschließend bei 5°C zu einer Lösung von 68,5 g (0,25 mol) der Verbindung aus Stufe A 3 (a) und 79,5 g (0,75 mol) Natriumcarbonat in 1 l Wasser getropft. Man erhält 117 g eines braunes Feststoffs mit dem Fp. 155°C.

(c) 42,5 g (0,1 mol) des Azofarbstoffs aus Stufe A 3 (b) werden mit 200 ml 2 n NaOH versetzt. Dann fügt man 50 g Zinkstaub hinzu und läßt innerhalb einer Stunde 80 ml 10 n NaOH zufließen, so daß die Temperatur unter 45°C bleibt. Anschließend erhitzt man vier Stunden auf 90°C, filtriert und säuert das Filtrat mit HCl an. Nach dem Umkristallisieren aus Cyclohexan resultieren 31 g 2-(2-Hydroxy-3-cyclohexyl-5-(3-carboxypropyl)-phenyl-benztriazol als farblose Kristalle vom Fp. 165°C.

### B: Erfindungsgemäße Herstellung eines Polycarbonats

33,9 g Verbindung A 1, 10,7 g Diphenylcarbonat und 301 g eines linearen Polycarbonates auf Basis Bisphenol A mit der Lösungsviskosität 1,28 werden homogenisiert und unter Vakuum (0,1 mm) 1 h auf 320°C erhitzt.
Man erhält ein gelbliches Polymer mit der rel. Lösungsviskosität 1,18 (0,5 g in 100 ml Methylenchlorid). Die Gelpermeationschromatographie zeigt beim Einsatz von UV-Detektion (350 nm) und UV-Detektion (254 nm), daß die Verbindung A 1 gleichmäßig im Polymer eingebaut ist.

## Patentansprüche

1. Verfahren zur Herstellung von UV-stabilen Polycarbonaten, dadurch gekennzeichnet,, daß thermoplastische, aromatische Polycarbonate mit $\overline{M}w$ (Gewichtsmittelmolekulargewichten, ermittelt durch Lichtstreuung) von 1.500 bis 250.000 mit Verbindungen der Formel (I)

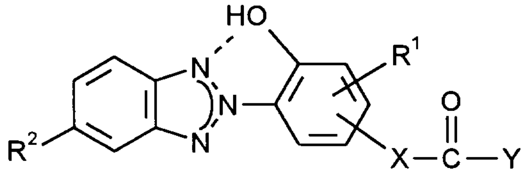

(I)

worin

$R^1$ H, $C_1$-$C_{18}$-Alkyl, $C_5$-$C_6$-Cycloalkyl, $C_6$-$C_{12}$-Aryl, $R^2$ H, Cl oder $C_1$-$C_{12}$-Alkyl,
X eine Einfachbindung, ein $C_1$-$C_{12}$-Alkylen, $C_5$-$C_6$-Cycloalkylen oder Phenylen und
Y OH, O-Alkali, -O-Ammonium oder O-(1/2 Erdalkali) bedeuten,

in Mengen von 0,01 Gew.-% bis 35 Gew.-%, bezogen jeweils auf 100 Gew.-% thermoplastisches Polycarbonat, 0,5 bis 1,5 Mol Diarylcarbonaten pro Mol Verbindung (I) bei Temperaturen von 200 bis 420°C und bei Drücken von 0,01 mbar bis 1.000 mbar umgesetzt werden, wobei Reaktionszeiten von wenigen Minuten bis zu einigen Stunden eingehalten werden.

**2.** UV-stabile Polycarbonate, erhältlich nach Anspruch 1.

**3.** Verwendung der Polycarbonate des Anspruchs 2 zur Herstellung von Platten.

**4.** Verwendung der Polycarbonate des Anspruchs 2 zur Herstellung von mehrschichtigen Kunststofftafeln.

Europäisches Patentamt

# EUROPÄISCHER RECHERCHENBERICHT

Nummer der Anmeldung
EP 95 11 2503

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | CHEMICAL ABSTRACTS, vol. 122, no. 4, 23. Januar 1995, Columbus, Ohio, US; abstract no. 32910, * Zusammenfassung * * RN 21371-50-6 * & JP-A-6 107 805 (TAKIRON CO.) 19. April 1994 --- | 2 | C08G64/42<br>B29C47/06 |
| X | CHEMICAL ABSTRACTS, vol. 121, no. 26, 26. Dezember 1994, Columbus, Ohio, US; abstract no. 301651, * Zusammenfassung * * RN 159043-45-5 * & JP-A-6 107 779 (MITSUBISHI GAS CHEMICAL CO.) 19. April 1994 --- | 2 | |
| A | EP-A-0 338 355 (MOBAY CORP.) * Ansprüche 1,3-5 * --- | 1-4 | |
| D,A | EP-A-0 057 160 (CIBA-GEIGY AG) * Anspruch 1 * * Seite 18, Absatz 4 - Seite 19, Absatz 2 * * Seite 51; Beispiel IV * --- | 1 | **RECHERCHIERTE SACHGEBIETE (Int.Cl.6)**<br>C08G<br>C08K |
| D,A | US-A-3 214 436 (R.J. BOYLE ET AL.) * Anspruch 1; Beispiel 7 * * Spalte 3, Zeile 16 - Zeile 57 * --- | 1 | |
| A | CHEMICAL ABSTRACTS, vol. 120, no. 10, 7. März 1994, Columbus, Ohio, US; abstract no. 108473, * Zusammenfassung * & GOSEI JUSHI, Bd.39, Nr.2, 1993, JAPAN Seiten 50 - 55 S. KANAYAMA ET AL. --- -/-- | 2 | |

Der vorliegende Recherchenbericht wurde für alle Patentansprüche erstellt

| Recherchenort | Abschlußdatum der Recherche | Prüfer |
|---|---|---|
| BERLIN | 28. Dezember 1995 | Krische, D |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)

Europäisches Patentamt

# EUROPÄISCHER RECHERCHENBERICHT

Nummer der Anmeldung
EP 95 11 2503

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | CHEMICAL ABSTRACTS, vol. 121, no. 18, 31. Oktober 1994, Columbus, Ohio, US; abstract no. 206324, * Zusammenfassung * & JP-A-6 145 330 (IDEMITSU PETROCHEMICAL CO.) 24. Mai 1994 --- | 2 | |
| A | FR-A-2 215 440 (IDEMITSU KOSAN CO. LTD.) * Anspruch 1 * * Seite 4, Zeile 12 - Zeile 33 * --- | 2 | |
| P,A | DATABASE WPI Week 9531, Derwent Publications Ltd., London, GB; AN 95-237230 & JP-A-7 145 246 (TAKIRON KK) 6. Juni 1995 * Zusammenfassung * --- | 1 | |
| A | US-A-4 101 519 (J.E. HALLGREN) * Ansprüche 1-3,8 * ----- | 1 | |

RECHERCHIERTE SACHGEBIETE (Int.Cl.6)

Der vorliegende Recherchenbericht wurde für alle Patentansprüche erstellt

| Recherchenort | Abschlußdatum der Recherche | Prüfer |
|---|---|---|
| BERLIN | 28. Dezember 1995 | Krische, D |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPO FORM 1503 03.82 (P04C03)